# EUROPÄISCHE PATENTSCHRIFT

(11) **EP 1 221 202 B1**
(45) Veröffentlichungstag und Bekanntmachung des Hinweises auf die Patenterteilung: **23.07.2003**
(21) Anmeldenummer: 00943677.5
(22) Anmeldetag: 31.05.2000
(51) Int. Cl.: H04B 1/38

(54) **MOBILES ELEKTRONISCHES GERÄT MIT EINER FUNKSCHNITTSTELLE**
MOBILE ELECTRONIC APPLIANCE WITH A RADIO INTERFACE
APPAREIL ELECTRONIQUE MOBILE POURVU D'UNE INTERFACE RADIO

(30) Priorität: 14.10.1999 DE 19949609
(43) Veröffentlichungstag der Anmeldung: 10.07.2002
(73) Patentinhaber: SIEMENS AKTIENGESELLSCHAFT, 80333 München (DE)
(72) Erfinder: KARNER, Peter, A-3204 Kirchberg (AT); SCHLADOFSKY, Werner, A-1130 Wien (AT); HRABY, Günther, A-3021 Pressbaum (AT)
(86) Internationale Anmeldenummer: DE0001794
(87) Internationale Veröffentlichungsnummer: WO01028109

(56) Entgegenhaltungen:
- WO-A-98/57824
- WO-A-99/27716
- GB-A- 2 325 592
- US-A- 5 825 327

## Beschreibung

Die Erfindung bezieht sich auf ein mobiles elektronisches Gerät mit zumindest einer, über eine Funkschnittstelle dem Gerät zugeordneten Peripherieeinheit sowie mit einer eine Ortsinformation bezüglich des Aufenthaltsortes des Gerätes liefernden Positionsbestimmung.

Unter Geräten solcher Art sind beispielsweise Autofunkgeräte zu verstehen, die einen oder mehrere über die Funkschnittstelle daran "angeschlossene" Schnurloshörer aufweisen, sodass beispielsweise Mitfahrer, auch im Fond des Autos, oder Insassen eines Reisebusses über solche Schnurloshörer, die natürlich eine Hör- und eine Mikrofonkapsel beinhalten, telefonieren können. Es kann sich aber auch um mobile Geräte der Unterhaltungselektronik handeln, an welche andere Peripheriegeräte, wie Drucker, Ein/Ausgabegeräte, etc. über Funkschnittstellen angeschlossen sind.

Die Patentschrift GB 2 325 592 offenbart ein mobiles Funlegerät, bei dem äbhängig vom Aufenthalts art die Ausstrahlung von Radiosignalen gesteuert wird.

Bei länderüberschreitendem Einsatz solcher Geräte tritt das Problem auf, dass unterschiedliche nationale Regelungen für den zulässigen Frequenzbereich der Funkschnittstelle existieren. Beispielsweise ist dafür im allgemeinen das ISM-Band im Frequenzbereich von 2400 bis 2483 MHz vorgesehen, doch ist dieser Frequenzbereich in einigen Ländern nur eingeschränkt nutzbar, z.B. derzeit in Frankreich nur von 2446 bis 2454 MHz. Ebenso ist es möglich, dass von bestimmten, genau festgelegten Kanälen in manchen Ländern nur eine Auswahl zugelassen ist. Gleiche Überlegungen gelten für die unterschiedlichen Bestimmungen hinsichtlich der maximal zulässigen Sendeleistung, z.B. 20 mW oder 50 mW, etc.

Bei Grenzüberschreitungen mit einem Gerät, insbesondere in einem Kraftfahrzeug oder auch einem Boot, muss daher eine Anpassung des Frequenzbereiches bzw. der Kanäle oder der Sendeleistung der Funkschnittstelle an die nationalen Vorschriften möglich sein bzw. auch erfolgen.

Die möglichen Modi der Funkschnittstelle, wie Frequenz/Kanalbereich, Sendeleistung, Modulation, etc. werden im folgenden in dem Begriff "Betriebskonfiguration" zusammengefasst.

Eine Aufgabe der Erfindung liegt darin, Geräte der betrachteten Art zu schaffen, die für einen problemlosen Einsatz in wechselnden Ländern geeignet sind.

Diese Aufgabe lässt sich mit einem mobilen elektronischen Gerät der eingangs genannten Art lösen, bei welchem erfindungsgemäß eine Konfigurationsauswahl vorgesehen ist, in welcher für die Funkschnittstelle bestimmte Betriebskonfigurationen Aufenthaltsorten zugeordnet sind, die Ortsinformation der Positionsbestimmung der Konfigurationsauswahl zuführbar ist und diese dazu eingerichtet ist, entsprechend der Ortsinformation die dem aktuellen Aufenthaltsort zugeordneten Betriebskonfigurationen der Basis der Funkschnittstelle zur Verfügung zu stellen.

Die Erfindung stellt sicher, dass bei Überschreiten von Ländergrenzen eine automatische Anpassung an die nationalen Vorschriften erfolgen kann, wozu die Verknüpfung der Ortsinformation mit den Betriebskonfigurationen dient.

Sofern das Gerät ein Mobilfunkgerät, z.B. nach dem GSM-Standard enthält oder unmittelbar als solches ausgebildet ist, kann es von Vorteil sein, wenn die Positionsbestimmung zur Auswertung eines von Basisstationen des Mobilfunknetzes mitgesandten Ländercodes als Ortsinformation eingerichtet ist.

Zweckmäßig ist es auch, wenn das Gerät einen Navigationsempfänger, insbesondere Satellitennavigationsempfänger zur Ermittlung der Ortsinformation aufweist. Satellitennavigationsempfänger sind bereits in vielen Geräten integriert bzw. können die Geräte auf einen solchen Empfänger zugreifen, was beispielsweise für Mobilfunkgeräte in Autos mit Bodennavigationsgeräten gilt.

Besonders wichtig und zweckmäßig sind Geräte, bei welchen die Peripherieeinheit ein schnurloser Hörer ist.

Wie bereits erwähnt ist es vorteilhaft, wenn die Betriebskonfigurationen länderspezifische Frequenzen bzw. Frequenzbereiche der Funkschnittstelle beinhalten. Ebenso kann es zweckmäßig sein, wenn die Betriebskonfiguration länderspezifische, maximal zulässige Sendeleistungen der Funkschnittstelle beinhalten.

Bei einer vorteilhaften Weiterbildung der Erfindung kann auch vorgesehen sein, dass es einen Notrufnummernspeicher mit Aufenthaltsorten zugeordneten Notrufnummern enthält und die Ortsinformation zur Auswahl länderspezifischer Notrufnummern herangezogen ist. Diese Ausbildung ermöglicht beispielsweise bei automatischer Notrufauslösung durch einen Crashsensor die Auswahl der korrekten Notrufnummern.

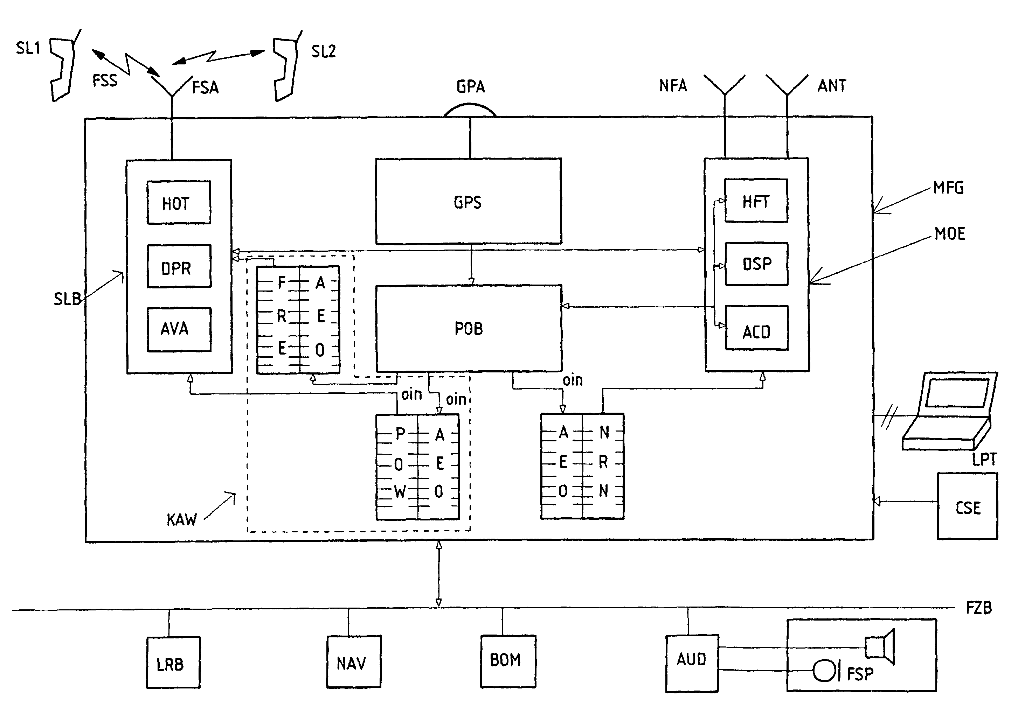

Die Erfindung samt weiterer Vorteile ist im folgenden unter Bezugnahme auf die Zeichnung näher erläutert. Diese zeigt anhand eines Blockschaltbildes ein Ausführungsbeispiel der Erfindung, verwirklicht als Mobiltelefon in einem PKW.

Das Ausführungsbeispiel nach der Erfindung ist anhand eines in ein Kraftfahrzeug eingebauten Mobilfunkgerätes MFG erläutert. Dieses Mobilfunkgerät MFG besitzt eine Mobilfunkeinheit MOE, die in üblicher Weise ein HF-Teil HFT, einen digitalen Signalprozessor DSP und eine Audiocodierung/Decodierung enthält. Die Mobilfunkeinheit kann beispielsweise nach dem bekannten GSM-Standard arbeiten. Neben einer üblichen Antenne ANT ist noch eine Notfallsantenne NFA vorgesehen, die bei Zerstörung der eigentlichen Antenne ANT zufolge eines Unfalls noch Funkverkehr ermöglichen soll. Das Mobilfunkgerät MFG enthält weiters eine Schnurlos-Basis SLB mit einem HF-Teil HOT, einem digitalen Prozessor TPR und einer Audioverarbeitung AVA sowie mit einer Antenne FSA, wobei diese Schnurlosbasis SLB über eine Funkschnittstelle FSS mit einem oder im vorliegenden Fall mit zwei Schnurloshörern SL1, SL2 in Verbindung stehen kann. Ganz allgemein kann über die Funkschnittstelle FSE ein Peripheriegerät angeschlossen sein. Im vorliegenden Fall sollen jedoch über die Schnurloshörer SL1, SL2 Telefongespräche von einem Beifahrer oder von anderen Passagieren des Kraftfahrzeuges geführt werden können.

Das Mobilfunkgerät steht über einen Fahrzeugbus FZB in bekannter Weise mit anderen Peripherieeinheiten in Verbindung, wie mit einer Lenkradbedienung LRB, einem Navigationsgerät NAV, einem Bordmonitor BOM und einem Audiocontroller AUD, der mit Hilfe einer Freisprecheinrichtung FSP auch Freisprechen ermöglicht. Dieses ist insbesondere für den Fahrer des Kraftfahrzeuges wichtig, wogegen andere Passagiere mit Hilfe eines Schnurloshörers SL1, SL2 auch die Vertraulichkeit der Gespräche wahren können.

Wie der Zeichnung entnehmbar, kann über eine weitere Schnittstelle, z.B. eine RS-232-Schnittstelle, ein tragbarer Personal-Computer LPD oder dergleichen angeschlossen sein, und außerdem führt das Signal eines Crash-Sensors CSE zu dem Mobilfunkgerät MFG.

Im vorliegenden Fall enthält das Mobilfunkgerät MFG einen Satellitennavigationsempfänger GPS mit einer Antenne GPA zur Positionsbestimmung. Im Zusammenhang mit einem Navigationssystem NAV werden solche Navigationsempfänger häufig eingesetzt, wobei auf dem Bordmonitor BOM entsprechende Hinweise, gegebenenfalls im Landkartenformat, für den Fahrer erfolgen können. Ob der Satellitennavigationsempfänger GPS in dem Mobilfunkgerät MFG physisch angesiedelt oder an anderer Stelle des Fahrzeuges untergebracht ist, ist für die Betrachtung im Zusammenhang mit der Erfindung nebensächlich.

Die Erfindung sieht nun vor, dass eine Konfigurationsauswahl KAW vorgesehen ist, in welcher für die Funkschnittstelle bestimmte Betriebskonfigurationen Aufenthaltsorten AEO zugeordnet sind. Im vorliegenden Fall sind die Aufenthaltsorte AEO einer Anzahl von Frequenzen FRE zugeordnet und andererseits sind die Aufenthaltsorte AEO Sendeleistungen POW der Funkschnittstelle FSS zugeordnet. Seitens einer Positionsbestimmung POB wird eine Ortsinformation oin der Konfigurationsauswahl KAW zugeführt. Je nach Art der Ortsinformation oin wird ein bestimmter Frequenzbereich oder eine bestimmte Kanalanzahl für die Funkschnittstelle FSE bestimmt und gleiches gilt für die zulässige Sendeleistung POW der Funkschnittstelle FSS. Die Ortsinformation oin muss länderbezogen sein, wobei hier unter "Land" ein Gebiet mit bestimmten Vorschriften bezüglich der Funkschnittstelle FSS zu verstehen ist. Um diese Ortsinformation oin zu erhalten, kann im vorliegenden Fall das Satellitennavigationssystem GPS herangezogen werden, welches ein entsprechende Signal an die Positionsbestimmung POB liefert. Anhand der Koordinaten kann die Positionsbestimmung POB feststellen, in welchem Land sich das Fahrzeug befindet und durch die Ortsinformation oin eine entsprechende Anpassung der Funkschnittstelle FSS an die Gesetzgebung durchführen.

Einer andere und sehr einfache Möglichkeit zur Erlangung der Ortsinformation kann mit Hilfe der Mobilfunkeinheit MOE erfolgen, da beispielsweise bei einem GSM-System die jeweiligen Basisstationen automatisch einen Ländercode mitsenden bzw. ein solcher Ländercode mit einem Standardbefehl abfragbar ist. Wenn daher festgestellt wird, dass sich das gegenständliche mobile elektronische Gerät in einem Land befindet, in dem beispielsweise nicht der gesamte Frequenzbereich des ISM-Bandes für die Funkschnittstelle FSS von 2400 bis 2483 MHz zugelassen ist, so erfolgt automatisch eine Einschränkung den gesetzlichen Bestimmungen entsprechend.

Die Positionsbestimmung POB, welche ihre Information entweder von dem Navigationsempfänger GPS oder von der Mobilfunkeinhcit MOE, im Idealfall auch von beiden Geräten, erhält, kann auch dazu verwendet werden, Notrufnummern NRN, die hier gleichfalls in einem Speicher gezeigt sind, aufgrund der Aufenthaltsorte AEO, die durch die Ortsinformation oin gegeben sind, länderspezifisch auszuwählen. Solche Notrufnummern können entweder manuell ausgelöst werden oder bei einem Unfall, gegebenenfalls durch den Crashsensor CSE ausgelöst, automatisch gewählt werden, wodurch selbst bei bewusstlosen Fahrzeuginsassen eine Notrufnummer angewählt wird. Dabei kann auch vorgesehen sein, dass über das Satellitennavigationssystem GPS die aktuellen Positionsdaten an die Notrufnummer weitergeleitet werden.

Dank der Erfindung erübrigt sich die sonst notwendige Konfiguration der Funkschnittstelle FSS an die gesetzlichen Bestimmungen des jeweiligen Landes. Besonders bei Kraftfahrzeugen, die häufig in andere Länder gelangen, ist dies eine wesentliche Erleichterung für den Fahrzeughalter, der oft aus Vergesslichkeit oder Bequemlichkeit die entsprechende Umstellung der Funkschnittstelle nicht vornimmt bzw. vornehmen lässt.

## Patentansprüche

1. Mobiles elektronisches Gerät mit zumindest einer, über eine Funkschnittstelle dem Gerät zugeordneten Peripherieeinheit (SL1, SL2) sowie mit einer eine Ortsinformation bezuglich des Aufenthaltsortes des Gerätes liefernden Positionsbestimmung (POB),
**dadurch gekennzeichnet,**
**dass** eine Konfigurationsauswahl (KAW) vorgesehen ist, in welcher für die Funkschnittstelle (FSS) bestimmte Betriebskonfigurationen Aufenthaltsorten (AEO) zugeordnet sind, die Ortsinformation (oin) der Positionsbestimmung (POB) der Konfigurationsauswahl zuführbar ist und diese dazu eingerichtet ist, entsprechend der Ortsinformation die dem aktuellen Aufenthaltsort zugeordneten Betriebskonfigurationen der Basis (SLB) der Funkschnittstelle zur Verfügung zu stellen.

2. Mobiles elektronisches Gerät nach Anspruch 1 welches eine Mobilfunkeinheit (MOE) enthält bzw. als solches ausgebildet ist,
**dadurch gekennzeichnet, dass** die Positionsbestimmung (POB) zur Auswertung eines von Basisstationen des Mobilfunknetzes mitgesandten Ländercodes als Ortsinformation eingerichtet ist.

3. Mobiles elektronisches Gerät nach Anspruch 1 oder 2,
**dadurch gekennzeichnet, dass** es einen Navigationsempfänger, insbesondere Satellitennavigationsempfänger (GPS) zur Ermittlung der Ortsinformation (oin) aufweist.

4. Mobiles elektronisches Gerät nach einem der Ansprüche 1 bis 3,
**dadurch gekennzeichnet, dass** die Peripherieeinheit (SL1, SL2) ein schnurloser Hörer ist.

5. Mobiles elektronisches Gerät nach einem der Ansprüche 1 bis 4,
**dadurch gekennzeichnet, dass** die Betriebskonfigurationen länderspezifische Frequenzen (FRE) bzw. Frequenzbereiche der Funkschnittstelle (FSS) beinhalten.

6. Mobiles elektronisches Gerät nach einem der Ansprüche 1 bis 5,
**dadurch gekennzeichnet, dass** die Betriebskonfiguration länderspezifische, maximal zulässige Sendeleistungen (POW) der Funkschnittstelle (FSS) beinhalten.

7. Mobiles elektronisches Gerät nach einem der Ansprüche 1 bis 6,
**dadurch gekennzeichnet, dass** es einen Notrufnummernspeicher (NOS) mit Aufenthaltsorten zugeordneten Notrufnummern (NRN) enthält und die Ortsinformation (oin) zur Auswahl länderspezifischer Notrufnummern herangezogen ist.

## Claims

1. Mobile electronic device with at least one peripheral unit (SL1, SL2) associated with the device via a radio interface and with a position finding device (FOB) supplying location information with respect to the location of the device,
**characterized in that** a configuration selection (KAW) is provided in which operating configurations intended for the radio interface (FSS) are allocated to locations (AEO), the location information (oin) of the position finding device (POB) can be supplied to the configuration selection and the latter is set up for providing the operating configurations allocated to the current location to the base (SLB) of the radio interface in accordance with the location information.

2. Mobile electronic device according to Claim 1, which contains a mobile radio unit (MOE) or is constructed as such a one, **characterized in that** the position finding device (POB) is set up for evaluating a country code, sent along by base stations of the mobile radio network, as location information.

3. Mobile electronic device according to Claim 1 or 2, **characterized in that** it exhibits a navigation receiver, particularly a satellite navigation receiver (GPS) for determining the location information (oin).

4. Mobile electronic device according to one of Claims 1 to 3, **characterized in that** the peripheral unit (SL1, SL2) is a cordless handset.

5. Mobile electronic device according to one of Claims 1 to 4, **characterized in that** the operating configurations contain national frequencies (FRE) or frequency ranges of the radio interface (FSS).

6. Mobile electronic device according to one of Claims 1 to 5, **characterized in that** the operating configurations contain national, maximum permissible transmission powers (POW) of the radio interface (FSS).

7. Mobile electronic device according to one of Claims 1 to 6, **characterized in that** it contains an emergency number memory (NOS) with emergency numbers (NRN) allocated to locations and the location information (oin) is used for selecting national emergency numbers.

## Revendications

1. Appareil électronique mobile pourvu d'au moins une unité périphérique (SL1, SL2) attribuée à l'appareil par l'intermédiaire d'une interface radio, aihsi que d'un intégrateur de position (POB) livrant une information de lieu par rapport au lieu de séjour de l'appareil, **caractérisé en ce qu'**une sélection de configuration (KAW) est prévue, dans laquelle certaines configurations d'exploitation sont attribuées à des lieux de séjour (AEO) pour l'interface radio (FSS), l'information de lieu (oin) de l'intégrateur de position (POB) pouvant être transmise à la sélection de configuration et celle-ci pouvant être aménagée de manière à mettre à disposition, en fonction de l'information de lieu, les configurations d'exploitation de la base (SLB) de l'interface attribuées au lieu de séjour actuel.

2. Appareil électronique mobile selon la revendication 1, lequel comprend une unité de téléphonie mobile (MOE) et formé en tant que tel, **caractérisé en ce que** l'intégrateur de position (POB) est aménagé pour évaluer comme information de lieu un code de pays émis depuis des stations de base du réseau de téléphonie mobile.

3. Appareil électronique mobile selon la revendication 1 ou 2, **caractérisé en ce qu'**il présente un récepteur de navigation, notamment un récepteur de navigation par satellite (GPS) pour détecter l'information de lieu (oin).

4. Appareil électronique mobile selon l'une quelconque des revendications 1 à 3, **caractérisé en ce que** l'unité périphérique (SL1, SL2) est un écouteur sans fil.

5. Appareil électronique mobile selon l'une quelconque des revendications 1 à 4, **caractérisé en ce que** les configurations d'exploitation contiennent des fréquences (FRE) spécifiques aux pays ou des zones de fréquences de l'interface radio (FSS).

6. Appareil électronique mobile selon l'une quelconque des revendications 1 à 5, **caractérisé en ce que** les configurations d'exploitation contiennent des puissances d'émission (POW) spécifiques aux pays, maximales admissibles de l'interface (FSS).

7. Appareil électronique mobile selon l'une quelconque des revendications 1 à 6, **caractérisé en ce qu'**il contient une mémoire de numéros d'urgence (NOS) avec des numéros d'urgences (NRN) attribués aux lieux de séjour, et que l'information de lieu (oin) est consultée pour le choix des numéros d'urgence spécifiques aux pays.
